(19) Europäisches Patentamt
European Patent Office
Office européen des brevets

(11) **EP 3 657 273 A1**

(12) **EUROPÄISCHE PATENTANMELDUNG**

(43) Veröffentlichungstag:
**27.05.2020 Patentblatt 2020/22**

(51) Int Cl.:
**G05B 19/042** (2006.01)    **G05B 17/02** (2006.01)

(21) Anmeldenummer: **18207601.8**

(22) Anmeldetag: **21.11.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder:
• **Schall, Daniel**
**1220 Wien (AT)**
• **Schneeweiß, Paul**
**1070 Wien (AT)**

(74) Vertreter: **Maier, Daniel Oliver**
**Siemens AG**
**Postfach 22 16 34**
**80506 München (DE)**

(54) **VERFAHREN ZUR BESTIMMUNG VON ZUMINDEST EINEM GERÄTEPARAMETER VON ZUMINDEST EINEM VON ZUMINDEST ZWEI GERÄTEN FÜR DEREN GEMEINSAMEN BETRIEB**

(57)    Verfahren zur Bestimmung eines Geräteparameters (131-135) von einem von zwei Geräten (101-105) für deren gemeinsamen Betrieb, wobei ein Erstes der Geräte (101-105) im Betrieb eine Ausgangsgröße (121-125) ausgibt, welche mittels dem Geräteparameter (131-135) angesteuert wird, und für die Geräte (101-105) jeweils ein Geräte-Modell (501-505) hinsichtlich des Betriebs-Verhalten des jeweiligen Geräts (101-105) in Abhängigkeit von der Ausgangsgröße (121-125) und dem Geräteparameter (131-135) erzeugt und trainiert wird, und ein Gesamt-Modell (520) hinsichtlich des Betriebs-Verhaltens der Geräte (101-105) unter Verwendung der jeweiligen Geräte-Modelle (501-505) erzeugt und trainiert wird, und ein Such-Verfahren unter Verwendung des Gesamt-Modells (520) zur Bestimmung des Geräteparameters (131-135) des ersten Geräts für deren gemeinsamen Betrieb ausgeführt wird.

FIG 1

EP 3 657 273 A1

**Beschreibung**

Die Erfindung betrifft ein Verfahren, eine Steuervorrichtung und ein System zur Bestimmung zumindest eines Geräteparameters von zumindest einem Gerät von zumindest zwei Geräten für deren gemeinsamen Betrieb.

Klimaanlagen oder Kältemaschinen können einen erheblichen Teil des gesamten Gesamtenergiebedarfs einer Industrieanlage oder eines Gebäudes ausmachen. Ungünstig gewählte Betriebsparameter solcher Kälteparameter können folglich dazu führen, dass Betriebskosten und Emissionen unerwünscht hoch ausfallen, was sich wirtschaftlich und ökologisch ungünstig auswirken kann.

Häufig werden in Gebäuden mehrere Kältemaschinen betrieben, um Ausfälle, Maschinenwartungen oder den saisonalen, temperaturabhängigen Kühlungsbedarf abdecken zu können. Dabei können Kältemaschinen nach Bedarf eingeschaltet oder ausgeschaltet werden, um eine geforderte Gesamtkühlleistung zu erhalten.

Die Art einer Kältemaschine hat einen entscheidenden Einfluss auf den Gesamtenergieverbrauch des Kältesystems. So können einzelne Kältemaschinen unterschiedliche Betriebsbereiche besitzen, sodass bei einer ungünstigen Auswahl einer Kältemaschine für sich oder eines Betriebsbereichs einer Kältemaschine die erforderliche Gesamtkühlleistung nicht oder nicht in einem stabilen Betriebsmodus erreicht werden kann.

Ferner können Kältemaschinen, abhängig von Typ und Alter, jeweils eine unterschiedliche Effizienzcharakteristik aufweisen. Beispielsweise kann die Effizienz einer Kältemaschine deutlich sinken, wenn sie nicht in einem optimalen Betriebsbereich betrieben wird. Folglich kann eine ungünstige Wahl an Konfigurationsparametern dazu führen, dass eine Kältemaschine in einem ineffizienten Betriebsbereich betrieben wird. Bisher wurden Kältemaschinen häufig konfiguriert, indem beispielsweise Erfahrungswerte, Faustregeln oder feste Regelwerke herangezogen werden.

Solche Regelwerke können auf einer Zielvorgabe basieren, sodass eine Angleichung der Maschinenbetriebsstunden erfolgen soll, wobei die tatsächlichen Maschinen-Charakteristika nicht zur Entscheidungsunterstützung herangezogen werden, sondern Herstellerangaben für Effizienzwerte und Leistungsbereiche, statt tatsächlich gemessener Werte. Die Effizienz-Charakteristika von Geräten können sich jedoch durch Alterung oder nach Wartungsmaßnahmen ändern und werden meist bei der Konfigurationsauswahl nicht berücksichtigt.

Werden ältere Geräte im Laufe der Zeit durch modernere, effizientere Maschinen ersetzt, so wird eine entsprechende Änderung der Effizienz-Charakteristika bei anderen Geräten eines Systems, welches mehrere Geräte aufweist, häufig nicht entsprechend berücksichtigt.

Es ist Aufgabe der Erfindung die gemeinsame Effizienz beim gemeinsamen Betrieb mehrerer Geräte zu verbessern.

Die Aufgabe wird durch ein Verfahren eingangs genannter Art gelöst, indem zumindest eines der zumindest zwei Geräte im Betrieb zumindest eine Ausgangsgröße ausgibt, welche mittels dem zumindest einen Geräteparameter angesteuert wird, und für die zumindest zwei Geräte jeweils ein, auf dem Prinzip des maschinellen Lernens beruhendes Geräte-Modell hinsichtlich des Betriebs-Verhalten des jeweiligen Geräts in Abhängigkeit von der zumindest einen Ausgangsgröße und dem zumindest einem Geräteparameter erzeugt und trainiert wird, und ferner ein, auf dem Prinzip des maschinellen Lernens beruhendes Gesamt-Modell hinsichtlich des Betriebs-Verhaltens der zumindest zwei Geräte unter Verwendung der jeweiligen Geräte-Modelle erzeugt und trainiert wird, und ein Such-Verfahren unter Verwendung des Gesamt-Modells zur Bestimmung des zumindest einen Geräteparameters des zumindest einen der zumindest zwei Geräte für deren gemeinsamen Betrieb ausgeführt wird und dadurch der zumindest eine Geräteparameter ermittelt wird.

Dadurch wird erreicht, dass bei Betrieb mehrerer Geräte deren gemeinsame Effizienz auf einfache Weise verbessert wird. Ferner können verschiedene Betriebsmoden der einzelnen Geräte unterstützt werden und eine optimierte gemeinsame Betriebskonfiguration gefunden werden. Außerdem kann durch den Einsatz maschinellen Lernens der Betrieb unter Einfluss von jahreszeitlichen Änderungen oder alterungsbedingten Veränderungen verbessert werden.

Es ist günstig, wenn zumindest eines der zumindest zwei Geräte eine Kältemaschine ist. Beispielsweise in Reinräumen in der Halbleiterfertigung, in der Produktion und Bestückung von Leiterplatten ist eine gleichmäßige Klimatisierung großer Räumlichkeiten wichtig. Daher werden dort häufig Klimasysteme mit mehreren Geräteeinheiten eingesetzt, welche durch das erfindungsgemäße Verfahren optimiert betrieben werden können und wodurch auf einfache Weise eine effiziente Betriebskonfiguration gefunden werden kann.

Dabei ist es besonders günstig, wenn der zumindest eine Geräteparameter die Kühlleistung eines der zumindest zwei Geräte ist, da beispielsweise die Kühlleistung einer Kältemaschine besonders einfach einstellbar ist.

Ferner ist es günstig, wenn die zumindest eine Ausgangsgröße die Temperatur eines Kühlmedium ist, welches durch zumindest eines der zumindest zwei Geräte strömt, da beispielsweise die Temperatur einer Kältemaschine mittels eines TemperaturSensors besonders einfach erfassbar ist.

In einer Weiterbildung der Erfindung wird das zumindest eine Geräte-Modell und/oder das Gesamt-Modell durch ein nicht-lineares Regressionsmodell beschrieben, vorzugsweise eine Support-Vector-Machine. Dadurch kann auf eine einfache Weise ein Modell, vorzugsweise ein Modell für Kältemaschinen, für maschinelles Lernen erzeugt und trainiert werden, wobei das Verhalten des Geräts flexibel modelliert werden kann, insbesondere sich zeitlich oder betrieblich ändernde Parameter.

In einer Weiterbildung der Erfindung ist es vorgesehen, dass die zumindest eine Ausgangsgröße mittels eines entsprechenden Messverfahrens in Form von Messdaten erfasst wird, und mittels der Messdaten das zumindest eine Geräte-Modell und/oder das Gesamt-Modell trainiert wird. Durch die Einbeziehung von Messdaten aus der Ausgangsgröße des Geräts kann ein besonders exaktes Modell, vorzugsweise ein Modell für Kältemaschinen, für maschinelles Lernen erzeugt und trainiert werden.

Die Erfindung betrifft auch eine Steuervorrichtung eingangs genannter Art, wobei zumindest eines der zumindest zwei Geräte im Betrieb dazu eingerichtet ist, zumindest eine Ausgangsgröße auszugeben, welche mittels des zumindest einen Geräteparameters von der Steuervorrichtung ansteuerbar ist, und die Steuervorrichtung dazu eingerichtet ist, das erfindungsgemäße Verfahren auszuführen und dadurch den zumindest einen Geräteparameter zu ermitteln.

Die Erfindung betrifft auch ein System eingangs genannter Art, wobei eine Messeinrichtung und eine erfindungsgemäße Steuervorrichtung umfasst ist, wobei die Messeinrichtung dazu eingerichtet ist, zumindest einen Messparameter, welcher von der zumindest einen Ausgangsgröße beeinflusst wird, mittels eines entsprechenden Messverfahrens, beispielsweise einer Temperaturmessung, in Form von Messdaten zu erfassen.

Die Erfindung wird nachfolgend anhand eines in den beigeschlossenen Zeichnungen dargestellten Ausführungsbeispiels näher erläutert. In den Zeichnungen zeigt:

Fig. 1         ein Blockschaltbild für ein Ausführungsbeispiel einer erfindungsgemäßen Anordnung,

Fig. 2-6       Kühlleistungs-Modelle für Kältemaschinen

Fig. 7-11      Energieverbrauchs-Modelle für Kältemaschinen für eine Solltemperaturregelung,

Fig. 12        einen Pseudo-Code für eine Optimierung,

Fig. 13-17     Energieverbrauchs-Modelle für Kältemaschinen für eine Solltemperaturregelung.

Die gezeigten Figuren stellen vereinfacht ein Ausführungsbeispiel eines erfindungsgemäßen Systems das, welches dazu vorgesehen ist, das erfindungsgemäße Verfahren auszuführen. Um die Verständlichkeit zu erhöhen wurde auf die Darstellung und Beschreibung weiterer Komponenten, wie Datenspeicher, Rechenvorrichtungen, Sensoren, Datenerfassungsvorrichtungen etc. verzichtet, wobei klar ist, dass diese Komponenten zur Ausführung des Verfahrens notwendig sein können.

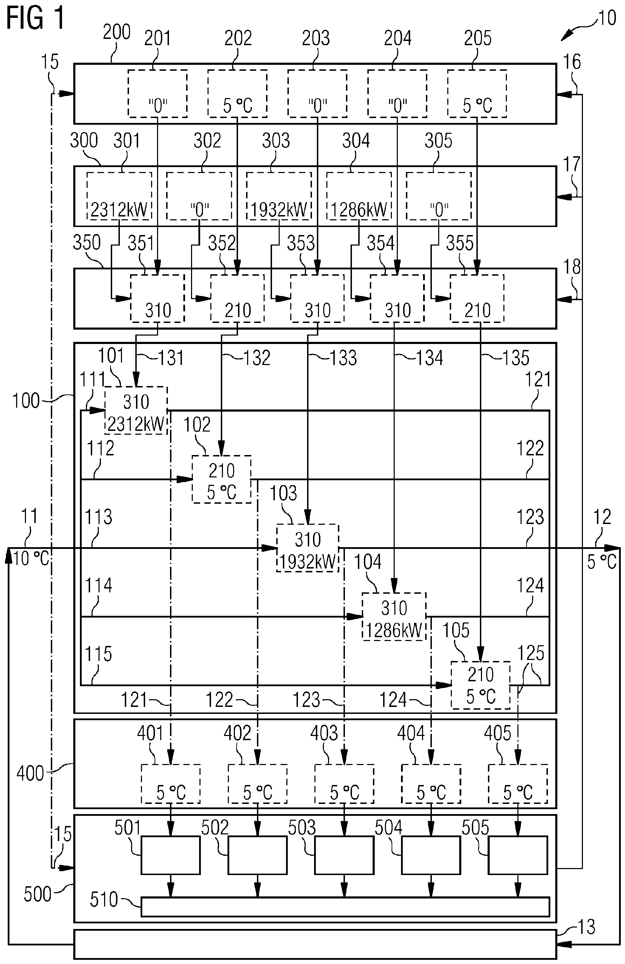

In Fig. 1 ist ein Blockschaltbild für ein Ausführungsbeispiel der Erfindung in Form eines Kühlsystems 10 gezeigt, in welchem fünf Geräte 101-105 in Form von Kühlmaschinen bzw. Kältemaschinen für einen gemeinsamen Betrieb als Kühlanlage 100 vorgesehen sind.

Alternativ zu Kältemaschinen können beispielsweise auch Heizgeräte, Ventilatoren, Luftbefeuchter, Geräte zur Wasserbehandlung, Filtervorrichtungen oder Druckpumpen gemeinsam betrieben werden und durch Anwendung des erfindungsgemäßen Verfahrens konfiguriert werden, beziehungsweise eine erfindungsgemäße Steuervorrichtung oder ein erfindungsgemäßes System bilden. Grundsätzlich sind Geräte zur Anwendung des erfindungsgemäßen Verfahrens geeignet, die eine gemeinsame Wirkung entfalten. Die gemeinsame Wirkung kann beispielsweise durch eine Zusammenführung der Ausgangsgröße erzielt werden, wobei dies beispielsweise in einem gemeinsamen Raum oder in einer gemeinsamen gespeisten Leitung der jeweiligen Ausgangsgröße der einzelnen Geräte erfolgen kann.

Ein Kühlmedium wird über einem gemeinsamen Zufluss 11 der Kühlanlage 100 mit den Kühlmaschinen 101-105 zugeführt, über einen gemeinsamen Abfluss 12 und eine thermische Last 13 wieder zurück an den Zufluss 11 mittels einer Verbindungsleitung weitergeleitet und so ein Kühlkreislauf gebildet, in welchem das Kühlmedium, beispielsweise Wasser oder Öl, zirkuliert.

Es ist jedoch für die Erfindung nicht wesentlich, dass ein Kreislauf gebildet wird. Beispielsweise kann auch eine Kühlvorrichtung mit einer Frischluftzufuhr verwendet werden, sowie die Abluft aus dem System abgeführt werden.

Im Bereich des gemeinsamen Zuflusses 11 wird mittels eines Temperatursensors eine Zufluss-Temperatur gemessen.

Der Kühlmedium wird nach dem gemeinsamen Zufluss 11 aufgeteilt und den verschiedenen Kühlmaschinen 101-105 über einen jeweiligen Eingang, welcher eine Eingangsgröße 111-115 in Form des ungekühlten Kühlmediums führt. Dabei kann es beispielsweise vorgesehen sein, dass das Kühlmedium in Abhängigkeit der Kühlleistung 141-145 oder der Effizienz der einzelnen Kühlmaschinen 101-105 zu ungleichen Teilen aufgeteilt wird.

Die Kühlmaschinen 101-105 weisen einen jeweiligen Ausgang auf, welcher ein gekühltes Kühlmedium führt, aus welchem eine Ausgangsgröße 121-125 abgeleitet wird.

Das Kühlmedium durchströmt somit die einzelnen Kühlmaschinen 101-105 und wird in weiterer Folge der thermischen Last 13 zugeführt. Die Last 13 kann mehrere Verbraucher aufweisen.

Im Bereich des gemeinsamen Abflusses 12 wird mittels eines Temperatursensors eine Abfluss-Temperatur gemessen.

Die Kühlmaschinen 101-105 weisen jeweils einen Steuer-Eingang 131-135 auf, mit welchem der jeweilige Geräteparameter 131-135, beispielsweise die Kühlleistung der einzelnen Kühlmaschinen 101-105, ansteuerbar sind. Mittels der Geräteparameters 131-135 sind die Geräte 101-105 ansteuerbar und im Betrieb dazu eingerichtet, eine jeweilige Ausgangsgröße 121-125 auszugeben.

Mit anderen Worten geben die Geräte 101-105 im Betrieb jeweils eine Ausgangsgröße 121-125 aus, beispielsweise ein mittels der Geräte 101-105 gekühltes Kühlmedium mit einer Ausgangstemperatur, welche mittels des jeweiligen Geräteparameters 131-135 angesteuert wird.

Je nach Ausführung der einzelnen Kühlmaschine 101-105 kann beispielsweise durch Vorgabe einer Kühlleistung variabel und unmittelbar elektronisch angesteuert werden.

Alternativ kann eine einzelne Kühlmaschine 101-105 durch eine Zweipunktregelung angesteuert werden, wobei die Zweipunktregelung in die jeweiligen Kühlmaschine 101-105 integriert sein kann. In diesem Fall kann die Ansteuerung erfolgen, indem lediglich ein Soll-Wert vorgegeben wird.

Ein Zweipunktregler ist ein unstetig arbeitender Regler mit zwei Ausgangszuständen. Je nachdem, ob der Istwert über oder unter dem Sollwert liegt, wird der obere oder der untere Ausgangszustand eingenommen. Zweipunktregler kommen dann zum Einsatz, wenn die Stellgröße nicht stetig variabel ist, sondern nur zwischen zwei Zuständen wechseln kann, z. B. Ein/Aus.

Der Einschaltgrad wird als Quotient von Einschaltzeit zu Gesamtzeit, also Summe von Einschalt- und Ausschaltzeit bezeichnet.

Der Zweipunktregler erreicht zwar den eingeschwungenen Zustand, kommt aber nie zur Ruhe. Bei starken Änderungen der Führungsgröße kann er aber Regelabweichungen schneller ausregeln als es mit anderen Regelverfahren möglich ist.

Die Kältemaschinen 101-105 können beispielsweise verschiedene Betriebsarten unterstützen, wie eine Solltemperaturregelung 210 oder eine Grundlastregelung 310, welcher für jede Kältemaschine 101-105 individuell einstellbar als:

- Solltemperaturregelung 210: Für eine Austrittstemperatur des durchströmenden Kühlmediums wird jeweils ein Sollwert für die jeweilige Kältemaschine 101-105 festgelegt, den die jeweilige Kältemaschine durch eine interne, automatische Regelung der Last zu erreichen versucht. Ist eine Kältemaschine 101-105 in diesem Betriebsmodus, so kann dies durch einen logischen Zustand "1" beschrieben werden. Ist die Kältemaschine 101-105 deaktiviert, so kann dies durch einen logischen Zustand "0" beschrieben werden. Die fünf Kältemaschinen 101-105 können für einen gemeinsamen Betrieb insgesamt $2^5$, also 32 Permutationen für die Gesamt-Konfiguration der Betriebszustände ausgewählt werden, das heißt "00000", wenn alle Kältemaschinen ausgeschaltet sind, und "11111", wenn alle Kältemaschinen 101-105 eingeschaltet sind.

- Grundlastregelung 310: Für die Kältemaschine 101-105 kann eine konstante Kühlleistung 141-145 vorgegeben werden, mittels welcher eine bestimmte Last innerhalb des Betriebsbereiches gekühlt werden kann. Die Kühlleistung 141-145 kann variabel eingestellt werden, wodurch für die fünf Kältemaschinen 101-105 nahezu unendlich viele Permutationen für die Gesamt-Konfiguration der Betriebszustände eingestellt werden können.

Im System 10 ist eine Auswahlvorrichtung 350 vorgesehen, mittels welcher zwischen dem Betriebsmodus für die Solltemperaturregelung 210, welcher auf Parametern 201-205 beruht, und dem Betriebsmodus für die Grundlastregelung 310, welcher auf Parametern 301-305 beruht, mit Hilfe eines Parameters 18 umgeschaltet werden kann. Von der Auswahlvorrichtung 350 aus erfolgt die Ansteuerung der Kältemaschinen 101-105 über die jeweiligen Geräteparameter 131-135.

Eine Auswahl des Betriebsmodus eines einzelnen Geräts kann beispielsweise manuell erfolgen, indem eine vordefinierte Grundlast festgelegt wird, bei welcher die Kältemaschine 101-105 arbeiten soll. Die Vorgabe hierfür kann individuell erfolgen, beispielsweise dadurch, dass die Kältemaschine zusätzlich Wärme erzeugt, die für einen Betrieb einer weiteren Anlage vorgesehen ist und aus diesem Grund nicht in die eingestellte Kälteleistung der Kältemaschine eingegriffen werden darf.

Beim gemeinsamen Betrieb kann zur Erreichung einer optimierten gemeinsamen Effizienz jede Kältemaschine 101-105 individuell die Betriebsart konfiguriert werden.

Die Bestimmung einer optimalen Gesamt-Konfiguration der Betriebszustände kann durch eine Analyse von Energieverbrauch und Kühlleistung 140, 141-145 der Kältemaschinen 101-105 erfolgen

Diesbezügliche Daten können beispielsweise messtechnisch durch eine Messeinrichtung 400, beispielsweise ein SCADA-System (Supervisory Control and Data Acquisition) in Form von Messdaten 401-405 erfasst werden, und in weiterer Folge in einem Datenspeicher oder einer Datenbank gespeichert werden. Mittels Data-Mining Methoden und Optimierungs-Heuristiken kann dann die optimale Gesamt-Konfiguration der Betriebszustände gefunden werden.

Unter SCADA versteht man allgemein das Überwachen und Steuern technischer Prozesse mittels eines Computer-Systems, beispielsweise ein System zur Überwachung des Durchflusses, des Drucks oder der Temperatur eines Mediums in einer Leitung.

Eine Messeinrichtung 400 ist dazu eingerichtet, jeweilige Messparameter 401-405 für die Geräte 101-105 mittels eines jeweiligen entsprechenden Messverfahrens in Form von Messdaten 401-405 zu erfassen, welche die Ausgangsgrößen 121-125 abbilden.

Eine Temperaturmessung der Messdaten 401-405 kann mittels eines jeweiligen, in den Zufluss, den Abfluss oder eine Verbindungsleitung des Kühlkreislauft eingebrachten Temperatursensors durchgeführt werden.

In Fig. 1 ist eine Steuervorrichtung 500 zur Bestimmung der Geräteparameter 131-135 der Geräten 101-105 für deren gemeinsamen Betrieb dargestellt.

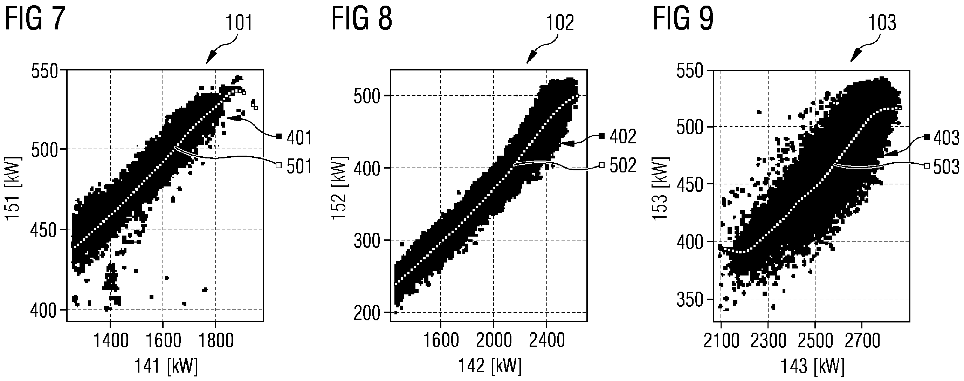

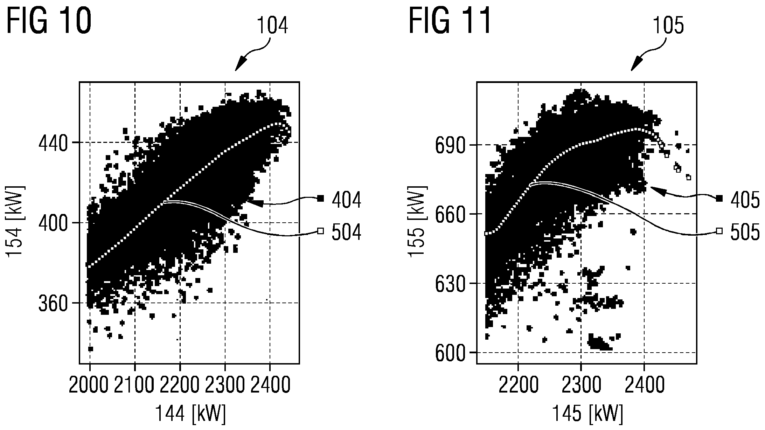

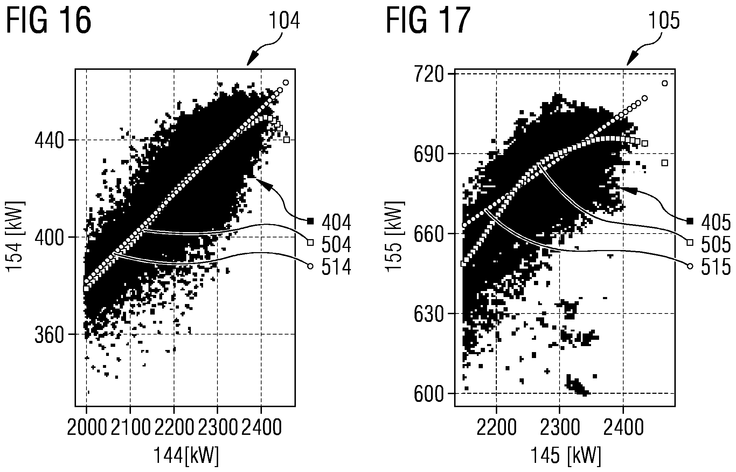

Für die Geräte 101-105 wird in der Steuervorrichtung 500 jeweils ein, auf dem Prinzip des maschinellen Lernens beruhendes Geräte-Modell 501-505 und 511-515 (siehe Fig. 7 bis 11 und 13 bis 17) hinsichtlich des Betriebs-Verhalten des jeweiligen Geräts 101-105 in Abhängigkeit von den Ausgangsgrößen 121-125 und dem Geräteparameter 131-135 erzeugt und trainiert.

Ferner wird in der Steuervorrichtung 500 ein, auf dem Prinzip des maschinellen Lernens beruhendes Gesamt-Modell 520 hinsichtlich des Betriebs-Verhaltens der Geräte 101-105 unter Verwendung der jeweiligen Geräte-Modelle 501-505, 511-515 erzeugt und trainiert.

Für die Erstellung und das Trainieren der Modelle 501-505, 511-515, 520 können optional die Messdaten 401-405 für das jeweilige Geräte-Modell 501-505, 511-515 und/oder das Gesamt-Modell 520 verwendet werden.

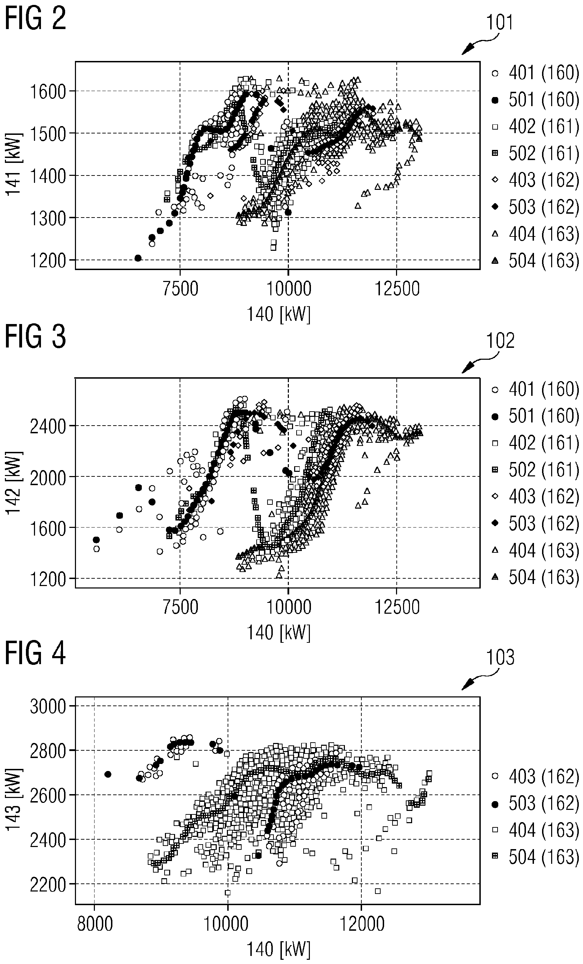

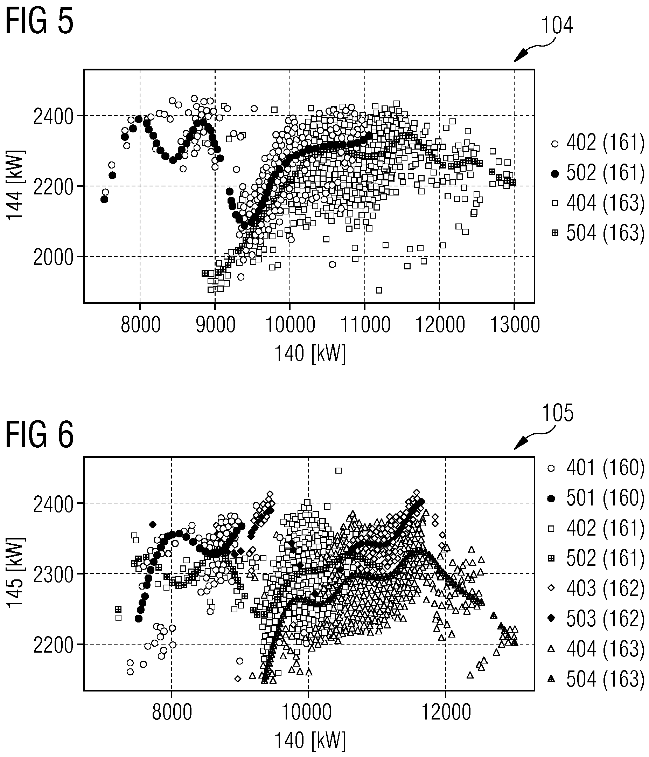

Der Zusammenhang zwischen einer Gesamt-Kühlleistung 140 und einer Kältemaschinen-Kühlleistung 141-145 ist in Fig. 2 bis 6 für verschiedene Konfiguration dargestellt.

Die Modelle 501-505, 511-515, 520 werden dazu eingesetzt, um die optimale Gesamt-Konfiguration der Betriebszustände zu suchen und festzulegen, mittels welcher die Geräteparameter 131-135 festgelegt werden.

In weiterer Folge wird ein Such-Verfahren unter Verwendung des Gesamt-Modells 520 zur Bestimmung des jeweiligen Geräteparameters 131-135 der Geräte 101-105 für deren gemeinsamen Betrieb ausgeführt, wodurch der jeweilige Geräteparameter 131-135 ermittelt wird.

Um die typischerweise nicht-linearen Zusammenhänge zu modellieren, wird eine geeignete Regressionsmethode, wie etwa Support Vector Machine (SVM) - auch Support Vector Machine - Regression (SVR) - genannt, eingesetzt. Das Modell 501-505, 511-515 kann dabei durch folgende Variablen beschrieben werden:

- Prädiktor-Variable: Konfiguration 160-163 und Gesamtkühlleistung 140
- Vorhersage-Variable: Energieverbrauch 151-155
- Regressionsmethode: Support Vector Machine

Das jeweilige Geräte-Modell 501-505, 511-515 und das Gesamt-Modell 520 kann durch ein nicht-lineares Regressionsmodell, beispielsweise mittels einer SVR beschrieben werden.

Fig. 2 bis 6 zeigt gemessene Daten 401-405, sowie eine nicht-lineare Modellierung 501-505 des Zusammenhangs zwischen Gesamtkühlleistung 140 und Kältemaschinenkühlleistung 141-145 abhängig von der eingesetzten Konfiguration 160-163 gemäß Tabelle 1.

Tabelle 1: System-Konfigurationen

| Konfiguration | Kältemaschine 101 | Kältemaschine 102 | Kältemaschine 103 | Kältemaschine 104 | Kältemaschine 105 |
|---|---|---|---|---|---|
| 160 | 1 (EIN) | 1 (EIN) | 0 (AUS) | 0 (AUS) | 1 (EIN) |
| 161 | 1 (EIN) | 1 (EIN) | 0 (AUS) | 1 (EIN) | 1 (EIN) |
| 162 | 1 (EIN) | 1 (EIN) | 1 (EIN) | 0 (AUS) | 1 (EIN) |
| 163 | 1 (EIN) | 1 (EIN) | 1 (EIN) | 1 (EIN) | 1 (EIN) |

Die Modelle 501-505 können für mögliche neue Konfigurationen, welche noch nie messtechnisch erfasst wurden, beispielsweise "01111", Annahmen treffen. Dabei kann von einer Gleichverteilung der Gesamt-Kühlleistung 140 innerhalb der definierten Betriebsbereiche der Kältemaschinen 101-105 ausgegangen werden. Sobald eine neue Konfiguration durch einen Optimierungsvorschlag zum Einsatz kommt, können die Modelle 501-505, 511-515, 520 durch die Messdaten 401-405 aktualisiert werden. Eine regelmäßige Aktualisierung der Modelle 501-505, 511-515, 520 ist daher vorgesehen.

Um für eine geforderte Gesamt-Kühlleistung 140 eine energieeffiziente Konfiguration 160-163 vorschlagen zu können, müssen Effizienzcharakteristiken der Kältemaschinen 101-105 bekannt sein. Die Energieeffizienz COP ("Coefficient of Performance") der jeweiligen Kältemaschine 101-105 kann durch den folgenden Zusammenhang berechnet werden:

$$COP_{KMx} = \frac{Q}{P}$$

wobei

COP      die Kälteziffer,

KMx      die Kältemaschine 101-105,

Q      die Kälteleistung in kW, und

P      der Energieverbrauch in kW ist.

Durch Analyse der Messdaten 401-405 kann gezeigt werden, dass die Effizienzcharakteristiken der Kältemaschinen 101-105 innerhalb ihrer Betriebsbereiche nicht exakt linear verlaufen. Es wird daher eine Regressionsmethode gewählt, mittels welcher nicht-lineare Zusammenhänge modelliert werden können. Die jeweiligen Modelle 501-505, 511-515, 520 können durch folgende Parameter beschrieben werden:

- Prädiktor-Variable: Kühlleistung 141-145
- Vorhersage-Variable: Energieverbrauch 151-155
- Regressionsmethode: Support Vector Machine

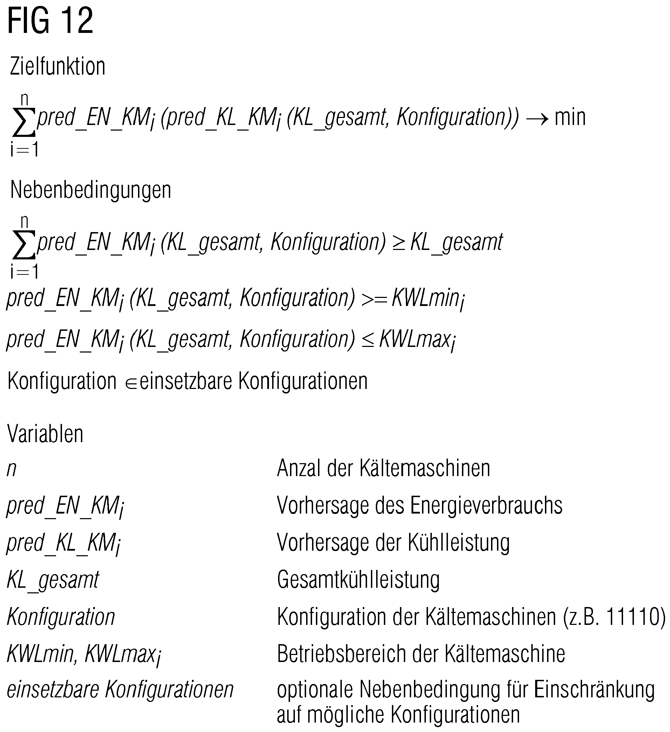

Fig. 7 bis 11 zeigen gemessene Werte der Kühlleistung 141-145 und des Energieverbrauchs 151-155 der jeweiligen Kältemaschine 101-105 mit jeweils einem angenäherten Modell 501-505. Die Modellierung zeigt, dass die Energieeffizienz der Kältemaschinen 101-105 von ihrer tatsächlichen Kühlleistung 141-145 abhängt.
Da sich Effizienzcharakteristiken der Kältemaschinen 101-105 beispielsweise durch Alterung oder Wartung verändern können, sollten die Modelle 501-505, 520 regelmäßig aktualisiert werden.
Die erstellten Modelle 501-505, 520 bilden die Grundlage für die Suche einer energieeffizienten Konfiguration 160-163. Für die Optimierung wird für jede zu erwartende Gesamtkühlleistung die optimale Konfiguration vorberechnet, wobei die Zielfunktion beispielsweise gemäß Fig. 12 formuliert ist.
Beim Lösen des Optimierungsproblems wird die Konfiguration 160-163 so lange variiert, bis der vorhergesagte Gesamtenergieverbrauch einen minimalen Wert annimmt. Dabei ist eine Reihe von Nebenbedingungen zu beachten. So soll zumindest die geforderte Gesamtkühlleistung 140 geliefert werden und die Kältemaschinen 101-105 sollen innerhalb ihrer Betriebsbereiche betrieben werden. Zusätzlich soll der Suchraum an möglichen Konfigurationen 160-163 beschränkt werden, beispielsweise wenn bestimmte Kältemaschinen 101-105 auf Grund von Zusatzfunktionen wie einer Wärmerückgewinnung ständig betrieben werden müssen.
Der Suchraum des Optimierungsproblems entspricht der Anzahl möglicher Kombinationen von aktiven Kältemaschinen 101-105 und ist daher begrenzt. Bei fünf Kältemaschinen 101-105 gibt es 32 theoretisch mögliche Konfigurationen und auch bei zehn Kältemaschinen ist der Suchraum mit 1024 möglichen Konfigurationen bei gängiger Rechenleistung einer Rechenvorrichtung in den meisten Fällen in hinreichend kurzer Zeitdauer berechenbar.
Üblicherweise kann zur Lösung des Optimierungsproblems ein Brute-Force-Ansatz eingesetzt werden, welcher alle möglichen Lösungen berechnet und anschließend die Konfiguration mit minimalem Energieverbrauch auswählt. Dadurch wird die bestmögliche Konfiguration, das heißt ein globales Optimum gefunden.
Bei einer sehr hohen Anzahl an Kältemaschinen 101-105 kann eine Suchheuristik eingesetzt werden, um in deutlich kürzerer Zeit eine energieeffiziente Lösung zu finden. Dazu kann ein genetischer Optimierungsalgorithmus eingesetzt werden, welcher durch eine Berechnungslogik versucht, lokale Optima zu vermeiden und typischerweise kann in kurzer Zeit eine sehr gute oder optimale Lösung gefunden werden.
Im Betriebsmodus der Grundlastregelung 310 kann für jede Kältemaschine 101-105 innerhalb ihres Betriebsbereiches eine elektrische Last vorgegeben werden, wodurch die Kühlleistung 141-145 unabhängig vom Kältebedarf konstant gehalten wird. Hinsichtlich einer Optimierung und Energieeinsparung kann diese Betriebsart sehr vorteilhaft sein, da die maschineninterne Regelung durch eine gesamtheitlich betrachtete optimale Vorgabe ersetzt wird.
Das Resultat dieser Optimierung besteht aus einer Konfigurationstabelle, die nicht nur die einzusetzenden Kältemaschinen 101-105, sondern auch deren Energiewerte 151-155 vorsieht.

Wie auch bei der Betriebsart Solltemperaturregelung können bei der Grundlastregelung für die Kältemaschine 101-105 nicht-lineare Vorhersagemodelle für den Energieverbrauch basierend auf der Kühlleistung 141-145 erstellt werden. Zusätzlich können lineare Modelle erstellt werden, welche dem Optimierungsverfahren als Startlösung dienen. Die Modelle 501-505, 511-515 werden basierend auf folgenden Daten angelernt:

- Prädiktor-Variable: Kühlleistung 141-145
- Vorhersage-Variable: Energieverbrauch 151-155
- Regressionsmethode: Support Vector Machine bzw. lineare Regression

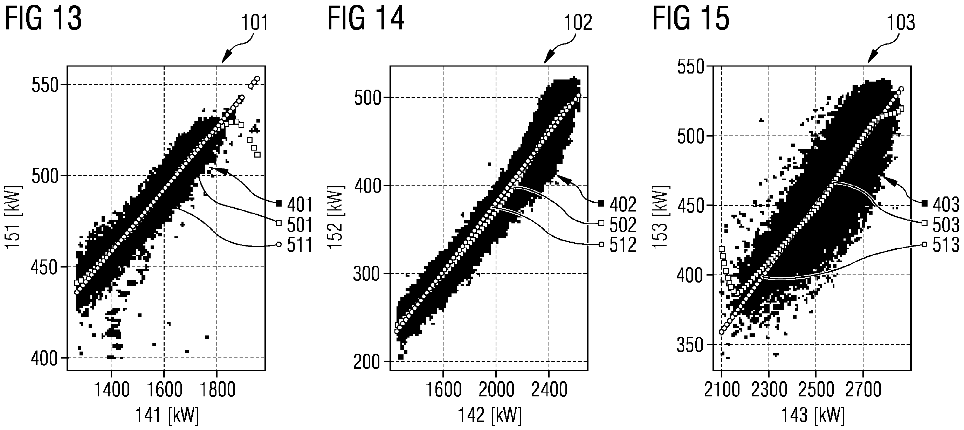

Fig. 13 bis 17 zeigen für jede Kältemaschine 101-105 die gemessene Werte 401-405 und dazu die nichtlinearen Modelle 501-505 und die linearen Modelle 511-515.

Da der Zusammenhang zwischen Kühlleistung 141-145 und Energieverbrauch 151-155 annähernd linear verlauft und lineare Optimierungsprobleme effizient lösbar sind, kann diese Erkenntnis als sinnvolle Startlösung für eine Suchheuristik verwendet werden, die auch die nicht-linearen Modelle 501-515 berücksichtigt.

Bei der Ermittlung der optimalen Konfiguration kann die Betriebsart der Grundlastregelung berücksichtigt werden, bei welcher die elektrische Leistung der Kältemaschinen kontinuierlich geregelt wird. Dadurch ergibt sich ein unendlicher Suchraum ergibt und eine erschöpfende Suche ist nicht mehr möglich. Es wird daher die Suchheuristik eines genetischen Algorithmus eingesetzt, der basierend auf dem biologischen Vorbild durch Mutationen und "Crossover"-Operationen in den meisten Fällen in kurzer Zeit eine hinreichend gute Lösung findet.

Vor allem bei einer großen Anzahl an Kältemaschinen 101-105 kann das Optimierungsverfahren durch gut gewählte Startlösungen maßgeblich unterstützt werden. Es wird daher ein mehrstufiges Optimierungsverfahren eingesetzt: Zunächst wird die Startlösung ermittelt, indem lineare Zusammenhänge zwischen Kühlleistung 140-145 und Energieverbrauch angenommen werden und das aufgestellte lineare Gleichungssystem mit Hilfe des Simplex-Algorithmus gelöst wird. Dieses findet in endlichen Schritten immer die optimale Lösung, d.h. die Konfiguration mit minimalem Energieverbrauch unter Einhaltung definierter Nebenbedingung wie einer minimalen Kühlleistung.

Beispiel für das mehrstufige Optimierungsverfahren mit einer Grundlastregelung 310:

1. Gewählte Gesamtkühlleistung = 5000 kW
2. Optimierung unter Annahme von linearen Modellen 511-515 (Simplex) und Bereitstellen einer Startlösung
3. Optimierung unter Annahme von nicht-linearen Modellen 501-505 (generisches Verfahren)
4. Optimale Konfiguration wird ermittelt:

   KM1 = 2312 kW
   KM2 = AUS (logisch "0")
   KM3 = 1932 kW
   KM4 = 1286 kW
   KM5 = AUS (logisch "0")

Die so ermittelte Konfiguration dient anschließend einem generische Suchverfahren als Ausgangspunkt für die Suche nach der optimalen Lösung unter Berücksichtigung der nichtlinearen Modelle 501-505.

In weiterer Folge wird der Regelmechanismus angepasst. Das beschriebene Verfahren liefert eine Konfiguration 160-163 der Kältemaschinen 101-105, um eine vorgegebene Kühlleistung bei minimalem Energieverbrauch zu erreichen. Die Integration dieser Konfigurationsempfehlung 160-163 in den bestehenden Regelmechanismus unterscheidet sich je nach Betriebsart der Kältemaschinen 101-105.

Bei einer Solltemperaturregelung 210 regelt das Gesamtkühlsystem auf eine bestimmte Austrittstemperatur von beispielsweise 5 °C. Ein Regelmechanismus sorgt dafür, dass bei Überschreiten des Sollwertes eine Kältemaschine 101-105 hinzugeschalten und bei Unterschreiten eine Kältemaschine 101-105 abgeschaltet wird.

Die Auswahl der Kältemaschine 101-105 wird durch das Optimierungsverfahren unterstützt, indem jene Kältemaschinen 101-105 ausgewählt werden, die für eine möglichst hohe Gesamteffizienz sorgen. Die Konfigurationsstrategie wird dabei in der SCADA-Datenbank abgelegt.

Über eine Automatisations-Schicht wird bei einer Abweichung von der Solltemperatur die Konfigurationstabelle aus dem SCADA-System bezogen und von der aktuellen Konfiguration ausgehend die nächste Konfiguration gewählt.

Tabelle 2 zeigt beispielhaft eine mögliche Konfigurationstabelle, die durch das Optimierungsverfahren ermittelt wird. Die Tabelle sollte regelmäßig, beispielsweise täglich, aktualisiert werden.

Tabelle 2: Konfigurationstabelle - Solltemperaturregelung

| Kühlleistung 141-145 | 101 | 102 | 103 | 104 | 105 |
|---|---|---|---|---|---|
| | 1 | 0 | 1 | 1 | 0 |
| | 1 | 0 | 1 | 1 | 0 |
| ↑ - ↓ + | 1 | 0 | 1 | 1 | 0 |
| | 0 | 1 | 1 | 1 | 1 |
| | 0 | 1 | 1 | 1 | 1 |
| | 0 | 1 | 1 | 1 | 1 |

Bei der Grundlastregelung 310 wird die interne Regelung der einzelnen Kältemaschinen 101-105 deaktiviert und die elektrische Leistung vorgegeben, welche die Gesamteffizienz des Kühlungssystems berücksichtigt, wie in Tabelle 3 dargestellt.

Tabelle 3: Konfigurationstabelle - Grundlastregelung

| Kühlleistung 141-145 [kW] | 101 | | 102 | | 103 | | 104 | | 105 | |
|---|---|---|---|---|---|---|---|---|---|---|
| | 151 | 141 | 152 | 142 | 153 | 143 | 154 | 144 | 155 | 145 |
| 5000 | 578 | 2312 | 0 | 0 | 525 | 1932 | 320 | 1286 | 0 | 0 |
| 5001 | 578 | 2313 | 0 | 0 | 525 | 1932 | 320 | 1286 | 0 | 0 |
| 5002 | 579 | 2314 | 0 | 0 | 525 | 1932 | 320 | 1286 | 0 | 0 |
| 5003 | 0 | 0 | 495 | 1243 | 236 | 1132 | 277 | 1310 | 310 | 1318 |
| 5004 | 0 | 0 | 495 | 1243 | 236 | 1133 | 277 | 1310 | 310 | 1318 |
| 5005 | 0 | 0 | 495 | 1243 | 236 | 1134 | 277 | 1310 | 310 | 1318 |

Die Konfigurationstabelle 3 enthält neben den EIN/AUS-Informationen (logisch "0"/"1") auch eine Vorgabe für die Grundlast der Kältemaschinen 101-105. In der Tabelle 3 entspricht ein Wert für eine Grundlast somit einem EIN-Zustand (logisch "1").

Bei einer Abweichung von der Solltemperatur des Kühlungssystems wird solange in die nächste Konfiguration gewechselt, bis die Solltemperatur erreicht wird.

Die Konfigurationstabelle nach Tabelle 2 kann in einer Datenbank des SCADA-Systems hinterlegt werden und sollte regelmäßig, beispielsweise täglich aktualisiert werden. Über die Automatisations-Schicht wird die Steuerungsinformation aus der Konfigurationstabelle zu den einzelnen Kältemaschinen 101-105 weitergeleitet.

Die Erfindung ist nicht auf die gezeigten Ausführungsformen beschränkt, sondern umfasst alle Varianten, Kombinationen und Anpassungen, welche in den Schutzumfang der beigefügten Ansprüche fallen.

**Bezugszeichenliste:**

| | |
|---|---|
| 10 | System |
| 11 | Zufluss |
| 12 | Abfluss |
| 13 | Verbraucher |
| 15 | gemessene Temperatur |
| 16, 17, 18 | Parameter |
| 100 | Kühlanlage |
| 101-105 | Kühlmaschine |
| 111-115 | Eingangsgröße der Kühlmaschine |
| 121-125 | Ausgangsgröße der Kühlmaschine |
| 131-135 | Steuer-Eingang der Kühlmaschine |
| 140 | Gesamt-Kühlleistung |

| 141-145 | Geräte-Kühlleistung |
| 151-155 | Geräte-Energieverbrauch |
| 160-163 | Aktuelle Geräte-Konfiguration |
| 200 | Solltemperatur-Regelungsvorrichtung |
| 201-205 | Parameter für Solltemperaturregelung |
| 210 | Betriebsmodus Solltemperaturregelung |
| 300 | Grundlast-Regelungsvorrichtung |
| 301-305 | Parameter für Grundlastregelung |
| 310 | Betriebsmodus Grundlastregelung |
| 400 | Messeinrichtung für Solltemperaturregelung |
| 401-405 | Messdaten für Solltemperaturregelung |
| 500 | Steuervorrichtung |
| 501-505 | Geräte-Modell, nicht-lineares Modell |
| 511-515 | Geräte-Modell, lineares Modell |
| 520 | Gesamt-Modell |

**Patentansprüche**

1. Verfahren zur Bestimmung zumindest eines Geräteparameters (131-135) von zumindest einem Gerät von zumindest zwei Geräten (101-105) für deren gemeinsamen Betrieb, **dadurch gekennzeichnet, dass** zumindest eines der zumindest zwei Geräte (101-105) im Betrieb zumindest eine Ausgangsgröße (121-125) ausgibt, welche mittels dem zumindest einem Geräteparameter (131-135) angesteuert wird, und für die zumindest zwei Geräte (101-105) jeweils ein, auf dem Prinzip des maschinellen Lernens beruhendes Geräte-Modell (501-505, 511-515) hinsichtlich des Betriebs-Verhalten des jeweiligen Geräts (101-105) in Abhängigkeit von der zumindest einen Ausgangsgröße (121-125) und dem zumindest einem Geräteparameter (131-135) erzeugt und trainiert wird, und ferner ein, auf dem Prinzip des maschinellen Lernens beruhendes Gesamt-Modell (520) hinsichtlich des Betriebs-Verhaltens der zumindest zwei Geräte (101-105) unter Verwendung der jeweiligen Geräte-Modelle (501-505, 511-515) erzeugt und trainiert wird, und ein Such-Verfahren unter Verwendung des Gesamt-Modells (520) zur Bestimmung des zumindest einen Geräteparameters (131-135) des zumindest einen der zumindest zwei Geräte (101-105) für deren gemeinsamen Betrieb ausgeführt wird und dadurch der zumindest eine Geräteparameter (131-135) ermittelt wird.

2. Verfahren nach dem vorhergehenden Anspruch, wobei zumindest eines der zumindest zwei Geräte (101-105) eine Kältemaschine ist.

3. Verfahren nach dem vorhergehenden Anspruch, wobei der zumindest eine Geräteparameter (131-135) die Kühlleistung eines der zumindest zwei Geräte (101-105) ist.

4. Verfahren nach dem vorhergehenden Anspruch, wobei die zumindest eine Ausgangsgröße (121-125) die Temperatur eines Kühlmedium ist, welches durch zumindest eines der zumindest zwei Geräte (101-105) strömt.

5. Verfahren nach einem der vorhergehenden Ansprüche, wobei das zumindest eine Geräte-Modell (501-505, 511-515) und/oder das Gesamt-Modell (520) durch ein nicht-lineares Regressionsmodell beschrieben ist, vorzugsweise eine Support-Vector-Machine.

6. Verfahren nach einem der vorhergehenden Ansprüche, wobei die zumindest eine Ausgangsgröße (121-125) mittels eines entsprechenden Messverfahrens in Form von Messdaten (401-405) erfasst wird, und mittels der Messdaten (401-405) das zumindest eine Geräte-Modell (501-505, 511-515) und/oder das Gesamt-Modell (520) trainiert wird.

7. Steuervorrichtung (500) zur Bestimmung zumindest eines Geräteparameters (131-135) zumindest eines von zumindest zwei Geräten (101-105) für deren gemeinsamen Betrieb, **dadurch gekennzeichnet, dass** zumindest eines der zumindest zwei Geräte (101-105) im Betrieb dazu eingerichtet ist, zumindest eine Ausgangsgröße (121-125) auszugeben, welche mittels des zumindest einen Geräteparameters (131-135) ansteuerbar ist, und die Steuervorrichtung (500) dazu eingerichtet ist, das Verfahren gemäß einem der vorhergehenden Ansprüche auszuführen und dadurch den zumindest einen Geräteparameter (131-135) zu ermitteln.

8. System (10) zur Bestimmung zumindest eines Geräteparameters (131-135) zumindest eines von zumindest zwei Geräten (101-105) für deren gemeinsamen Betrieb, **dadurch gekennzeichnet, dass** eine Messeinrichtung (400) und eine Steuervorrichtung (500) nach dem vorhergehenden Anspruch umfasst ist, wobei die Messeinrichtung (400) dazu eingerichtet ist, zumindest einen Messparameter (401-405), welcher von der zumindest einen Ausgangsgröße (121-125) beeinflusst wird, mittels eines jeweiligen entsprechenden Messverfahrens in Form von Messdaten (401-405) zu erfassen.

# FIG 1

## FIG 2

101

- ○ 401 (160)
- ● 501 (160)
- □ 402 (161)
- ▣ 502 (161)
- ◇ 403 (162)
- ◆ 503 (162)
- △ 404 (163)
- ▲ 504 (163)

## FIG 3

102

- ○ 401 (160)
- ● 501 (160)
- □ 402 (161)
- ▣ 502 (161)
- ◇ 403 (162)
- ◆ 503 (162)
- △ 404 (163)
- ▲ 504 (163)

## FIG 4

103

- ○ 403 (162)
- ● 503 (162)
- □ 404 (163)
- ▣ 504 (163)

FIG 5

104

FIG 6

105

FIG 7

FIG 8

FIG 9

EP 3 657 273 A1

FIG 11

FIG 10

# FIG 12

Zielfunktion

$$\sum_{i=1}^{n} pred\_EN\_KM_i \, (pred\_KL\_KM_i \, (KL\_gesamt, \, Konfiguration)) \rightarrow min$$

Nebenbedingungen

$$\sum_{i=1}^{n} pred\_EN\_KM_i \, (KL\_gesamt, \, Konfiguration) \geq KL\_gesamt$$

$pred\_EN\_KM_i \, (KL\_gesamt, \, Konfiguration) \mathrel{>}= KWLmin_i$

$pred\_EN\_KM_i \, (KL\_gesamt, \, Konfiguration) \leq KWLmax_i$

Konfiguration $\in$ einsetzbare Konfigurationen

Variablen

| | |
|---|---|
| $n$ | Anzal der Kältemaschinen |
| $pred\_EN\_KM_i$ | Vorhersage des Energieverbrauchs |
| $pred\_KL\_KM_i$ | Vorhersage der Kühlleistung |
| $KL\_gesamt$ | Gesamtkühlleistung |
| $Konfiguration$ | Konfiguration der Kältemaschinen (z.B. 11110) |
| $KWLmin, KWLmax_i$ | Betriebsbereich der Kältemaschine |
| $einsetzbare\ Konfigurationen$ | optionale Nebenbedingung für Einschränkung auf mögliche Konfigurationen |

FIG 13

FIG 14

FIG 15

FIG 16

FIG 17

Europäisches
Patentamt

European
Patent Office

Office européen
des brevets

**EUROPÄISCHER RECHERCHENBERICHT**

Nummer der Anmeldung

EP 18 20 7601

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/113482 A1 (VITULLO STEVEN R [US]) 26. April 2018 (2018-04-26) <br> * Absatz [0043] * <br> * Absatz [0054] - Absatz [0058]; Abbildung 2 * <br> * Absatz [0065]; Abbildung 3 * <br> * Absatz [0077] - Absatz [0081]; Abbildung 3 * <br> * Absatz [0089] - Absatz [0090] * <br> * Absatz [0101] - Absatz [0106]; Abbildung 3 und 4 * <br> * Absatz [0112] - Absatz [0115]; Abbildung 5 * <br> * Absatz [0119] * <br> ----- | 1-8 | INV. <br> G05B19/042 <br> G05B17/02 |
| X | US 2018/004171 A1 (PATEL NISHITH R [US] ET AL) 4. Januar 2018 (2018-01-04) <br> * Absatz [0047] - Absatz [0049] * <br> * Absatz [0079]; Abbildung 4 * <br> * Absatz [0085]; Abbildung 4 * <br> * Absatz [0100]; Abbildung 5 * <br> * Absatz [0118] - Absatz [0128]; Abbildung 6 * <br> * Absatz [0109] - Absatz [0112] * <br> * Absatz [0133]; Abbildung 6 * <br> * Absatz [0144]; Abbildung 6 und 7 * <br> * Absatz [0149] * <br> * Absatz [0170]; Abbildung 6 und 7 * <br> * Absatz [0178]; Abbildung 6 und 8 * <br> * Absatz [0190] - Absatz [0191]; Abbildung 8 * <br> ----- | 1-4,6-8 | |
| A | EP 3 270 239 A1 (KK TOSHIBA INC [JP] ET AL.) 17. Januar 2018 (2018-01-17) <br> * Absatz [0032] - Absatz [0033]; Abbildung 6 * <br> * Absatz [0036] - Absatz [0040]; Abbildung 7 * <br> ----- | 1-8 | |

RECHERCHIERTE
SACHGEBIETE (IPC)

G05B

Der vorliegende Recherchenbericht wurde für alle Patentansprüche erstellt

| Recherchenort | Abschlußdatum der Recherche | Prüfer |
|---|---|---|
| München | 21. Mai 2019 | Bernard, Eddy |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 20 7601

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2019

| Im Recherchenbericht angeführtes Patentdokument | Datum der Veröffentlichung | Mitglied(er) der Patentfamilie | Datum der Veröffentlichung |
|---|---|---|---|
| US 2018113482 A1 | 26-04-2018 | KEINE | |
| US 2018004171 A1 | 04-01-2018 | KEINE | |
| EP 3270239 A1 | 17-01-2018 | CN 107735735 A | 23-02-2018 |
| | | EP 3270239 A1 | 17-01-2018 |
| | | JP 6486731 B2 | 20-03-2019 |
| | | JP 2016170715 A | 23-09-2016 |
| | | SG 11201707302W A | 30-10-2017 |
| | | US 2018046158 A1 | 15-02-2018 |
| | | WO 2016147780 A1 | 22-09-2016 |

EPO FORM P0461

Für nähere Einzelheiten zu diesem Anhang : siehe Amtsblatt des Europäischen Patentamts, Nr.12/82